# EUROPEAN PATENT APPLICATION

(11) **EP 4 714 875 A1**
(43) Date of publication of application: **25.03.2026**
(21) Application number: 24937624.5
(22) Date of filing: 14.09.2024
(51) Int. Cl.: B65G 59/12, B65G 43/08, B65G 47/24, B65G 39/18, B65G 35/00, B07C 3/02

(54) **LOGISTICS TRANSPORTATION DEVICE BASED ON BIDIRECTIONAL SWIVEL WHEEL STRUCTURE AND OPERATING METHOD THEREFOR**

(30) Priority: 30.04.2024 CN 202410538510
(71) Applicant: Wayzim Technology Co., Ltd., Wuxi, Jiangsu 214000 (CN)
(72) Inventor: CAI, Ye, Wuxi, Jiangsu 214000 (CN); ZHAO, Longxiao, Wuxi, Jiangsu 214000 (CN); WANG, Ning, Wuxi, Jiangsu 214000 (CN); ZHANG, Danxiong, Wuxi, Jiangsu 214000 (CN); CAO, Zhongbao, Wuxi, Jiangsu 214000 (CN)
(74) Representative: Canzler & Bergmeier Patentanwälte Partnerschaft mbB
(86) International application number: PCT/CN2024/119203
(87) International publication number: WO 2025/227593

(57) **Abstract**

A logistics transportation device based on a bidirectional swivel wheel structure and an operating method therefor. A stacked object separation unit (1) is arranged at an input end of the logistics transportation device, and an output end of the stacked object separation unit (1) is connected to an input end of a single object separation unit (3) by means of a conveyor belt (2); an output end of the single object separation unit (3) is provided with a guiding and centering unit (4), and packages that passes through the guiding and centering unit (4) are then transported into an information collection and transmission unit (5), which is connected to an upper-level computer; an output end of the information collection and transmission unit (5) is connected to an input end of a transition unit (6), and an output end of the transition unit (6) is provided with at least one sorting swivel wheel unit (7) in the length direction of a transport track; openings (8) are arranged on both sides of each sorting swivel wheel unit (7), and slide rails (9) are arranged between each sorting swivel wheel unit (7) and the openings (8), with the outlets of the guide rails (9) being aligned with the openings (8); a reflective photoelectric sensor (10) is arranged at an input end of each sorting swivel wheel unit (7); and to address package misalignment problems, a deviation correction module (732) is provided within each sorting swivel wheel unit (7).

## Description

### CROSS REFERENCE TO RELATED APPLICATION

The present application claims the benefit of priority to Chinese Patent Application No. 202410538510.8, entitled "Logistics Transportation Device Based on Bidirectional Swing Wheel Structure and working method thereof", filed with CNIPA on April 30, 2024, the disclosure of which is incorporated herein by reference in its entirety for all purposes.

### FIELD OF TECHNOLOGY

The present disclosure relates to the technical field of logistics transportation equipment, in particular to a logistics transportation device based on a bidirectional swing wheel structure and a working method thereof.

### BACKGROUND

At present, the problems of the one-way logistics transportation mode in the logistics industry have become increasingly prominent. This traditional transportation method, which only considers the one-way flow from one location to another, often leads to low logistics efficiency.

To solve this problem, relevant technologies have attempted to realize the round-trip transportation of goods by setting two parallel transportation lines. However, although this method achieves two-way transportation, it also brings new problems. First, two-way transportation requires extra space to set up two parallel transportation lines, which is undoubtedly a waste for urban areas with limited land resources. Second, two-way transportation requires more investment in transportation equipment and labor, thereby increasing transportation costs.

In addition, in actual logistics operations, when logistics packages pass through the swing wheel device, they are prone to misalignment due to factors such as irregular packaging and machine vibration during transportation. In this case, the packages are likely to deviate to two sides of the swing wheel device, resulting in delays and chaos in the logistics process. However, the swing wheel devices currently on the market only have basic transmission functions and do not perform effective deviation correction for the problem of package misalignment.

### SUMMARY

The present disclosure provides a logistics transportation device based on a bidirectional swing wheel structure and a working method thereof, which can reasonably and efficiently transport packages to corresponding chutes and solve the problem of package deviation during transportation.

The technical scheme adopted by the present disclosure is as follows: a logistics transportation device based on a bidirectional swing wheel structure, comprising: a stack separation unit, a transport belt, a single-piece separation unit, a guiding and centering unit, an information acquisition and transmission unit, a transition unit, one or more sorting swing-wheel units, one or more chutes, one or more slide rails and a reflective photoelectric sensor;
the stack separation unit is arranged at an input end of the logistics transportation device; a discharge end of the stack separation unit is connected to a feed end of the single-piece separation unit through the transport belt; the guiding and centering unit is arranged at the discharge end of the single-piece separation unit; packages are transported into the information acquisition and transmission unit after passing through the guiding and centering unit; and the information acquisition and transmission unit is connected to a host computer; a discharge end of the information acquisition and transmission unit is connected to a feed end of the transition unit; a discharge end of the transition unit is provided with one or more sorting swing-wheel units along a longitudinal direction of a transportation track; the chutes are arranged on two sides of each of the sorting swing-wheel units; the slide rails are matched between each of the sorting swing-wheel units and a corresponding one of the chutes; and outlets of the slide rails are inclined and directly face the chutes; and a reflective photoelectric sensor is arranged at a feed end of the sorting swing-wheel unit, which is connected with the discharge end of the transition unit through the transportation track.

As a further improvement of the above technical scheme:
Preferably, the stack separation unit comprises a first stack separation plate, a second stack separation plate, and a third stack separation plate sequentially arranged along a package transportation direction; the first stack separation plate, the second stack separation plate, and the third stack separation plate are all inclined from low to high along the package transportation direction.

Preferably, the single-piece separation unit comprises: a single-piece separator outer frame; a separation belt conveyor assembly arranged inside the single-piece separator outer frame along the package transportation direction; and vision inspection cameras arranged at a top of the single-piece separator outer frame.

Preferably, the separation belt conveyor assembly comprises small separation belt conveyors; some of the small separation belt conveyors are transversely arranged and evenly distributed, and the others of the small separation belt conveyors are longitudinally arranged and evenly distributed; the vision inspection cameras detect positions of the packages conveyed to the separation belt conveyor assembly and upload detected package position information to the host computer; and the host computer controls activation of the separation belt conveyor assembly according to the package position information, so that the separation belt conveyor assembly outputs the packages at a fixed interval and in a single row toward the discharge end.

Preferably, the guiding and centering unit comprises: a guide rail arranged along the package transportation direction; a guide motor driving the guide rail; and guide rollers arranged along a running direction of the guide rail; the guide rollers are distributed in a bilaterally symmetric "V" shape.

Preferably, the information acquisition and transmission unit comprises: a camera mounting frame arranged around the transportation track along the package transportation direction; and information acquisition cameras arranged on the camera mounting frame at a front, rear, left, right, top, and bottom of the package transportation direction, the information acquisition cameras capture and collect the package information and upload it to the host computer, and the host computer calculates information of the chute.

Preferably, the transition unit comprises: an input-end transition curved rail connected to the discharge end of the information acquisition and transmission unit; a transition straight rail, wherein a discharge end of the input-end transition curved rail is connected to a feed end of the transition straight rail; and an output-end transition curved rail, wherein a discharge end of the transition straight rail is connected to the feed end of the output-end transition curved rail, and a discharge end of the output-end transition curved rail conveys the packages to the sorting swing-wheel units through the transportation track.

Preferably, each of the sorting swing-wheel units comprises: a swing-wheel frame; base support legs installed at a bottom of the swing-wheel frame; and a transport assembly arranged at a top of the swing-wheel frame; the transport assembly comprises a transport module for changing directions of the packages being transported, and deviation-correction modules arranged at two sides of the transport module.

Preferably, the transport module comprises: a driver, servo motors, electric rollers, steering tie rods, and steering mounting seats; the driver is electrically connected to the electric rollers; an output end at a top of the servo motors is connected to the steering tie rods; a rod body of each of the steering tie rods is fixedly connected to the steering mounting seats; the electric rollers are assembled at a top of the steering mounting seats; when the servo motors rotate, the steering tie rods drive the steering mounting seats to turn, thereby steering the electric rollers mounted at the top of the steering mounting seats; the driver is energized to rotate the electric rollers; each of the deviation-correction modules comprises: a deviation-correction base fixedly installed at the top of the swing-wheel frame; a mounting groove formed at a top of the deviation-correction base; and a universal ball assembled inside the mounting groove; when one of the packages deviates to one side during transportation, a side of the package abuts a top of the universal ball; a top height of the universal ball is set higher than an apex height of the electric roller; the driver is a bidirectional driver, and is electrically connected to a PLC controller.

A working method of a logistics transportation device based on a bidirectional swing wheel structure, comprising:
Step 1: feeding stacked packages into a stack separation unit from an input end of a transportation track, wherein the stacked packages pass through inclined surfaces of a first stack separation plate, a second stack separation plate, and a third stack separation plate in sequence, thereby separating the stacked packages;
Step 2: after the packages exit the stack separation unit, transporting the packages to a single-piece separation unit through a transport belt; vision inspection cameras in the single-piece separation unit detecting positions of the packages conveyed to a separation belt conveyor assembly and uploading the detected package position information to a host computer; the host computer controls activation of the separation belt conveyor assembly according to the package position information, so that the separation belt conveyor assembly outputs the packages at a fixed interval and in a single row toward the discharge end.
Step 3: after the packages are transported out of the single-piece separation unit at a fixed interval and in a single row, guiding the packages into a guiding and centering unit; when passing through guide rollers symmetrically arranged on two sides of the guiding and centering unit, guiding the packages out centrally due to a "V"-shaped symmetrical arrangement of the guide rollers on two sides of the guiding and centering unit;
Step 4: after the packages pass through the guiding and centering unit, guiding the packages out centrally to enter an information acquisition and transmission unit; information acquisition cameras of information acquisition and transmission unit collecting barcode information of the packages and uploading the information to the host computer; the host computer calculating the positions of respective chutes corresponding to the packages;
Step 5: conveying the packages out of the information acquisition and transmission unit, and passing the packages through a transition unit to enter sorting swing-wheel units along a package transportation direction; at feed end of the sorting swing-wheel units, the packages triggering a reflective photoelectric sensor, and notifying the sorting swing-wheel units that the packages have entered;
Step 6: the sorting swing-wheel units receiving the positions of the respective chutes corresponding to the packages as calculated by the host computer in Step 4; when the packages arrives at their respective designated positions, servo motors of the sorting swing-wheel units starting to drive steering tie rods; at this time, steering mounting seats fixedly connected to the steering tie rods driving electric rollers at a top of the steering mounting seats toward the respective corresponding chutes, and the packages respectively entering the corresponding chutes through the slide rails on a side of each of the chutes.

The beneficial effects of the present disclosure are as follows:

The device of the present disclosure has a reasonable structural design and achieves high efficiency throughout the overall transportation process. Through the sequential processes of stack separation, single-piece separation, guiding and centering, information collection, chute information determination, and sorting swing wheel steering, the packages are ultimately delivered to the corresponding chutes. The package transportation process is efficient, and no manual participation is required in package arrangement throughout the entire process, with a high degree of automation.

The present disclosure also has the following advantages:
(1) deviation-correction modules are disposed on two sides of the transport module of the sorting swing-wheel unit. The top height of the universal ball in the deviation-correction module is higher than the arc top height of the electric roller in the transport module. When a package deviates from the transportation direction due to issues such as irregular packaging or machine vibration during transportation, one side of the package will abut against the top of the universal ball. Since the top height of the universal ball is higher than the arc top height of the electric roller in the transport module, the center of gravity of the package will slightly deviate toward the transport module, and at this time, the rotation of the universal ball guides the package back to the transportation direction;
(2) the driver of the sorting swing-wheel unit is a bidirectional driver and is electrically connected to the PLC. The PLC can send electrical signals to the driver to realize the forward or reverse rotation of the driver. When individual sorting failures occur during transportation or packages are transported to the end of the line (i.e., the end of the transportation track), reverse sorting can be adopted, thereby reducing the time required for manual sorting.

### BRIEF DESCRIPTION OF THE DRAWINGS

FIG.1 is a schematic diagram of an overall structure of a logistics transportation device according to the present disclosure.
FIG.2 is a schematic structural diagram of a stack separation unit according to the present disclosure.
FIG.3 is a schematic structural diagram of a single-piece separation unit according to the present disclosure.
FIG.4 is a schematic structural diagram of a guiding and centering unit according to the present disclosure.
FIG.5 is a schematic structural diagram of an information acquisition and transmission unit according to the present disclosure.
FIG.6 is a schematic structural diagram of a transition unit according to the present disclosure.
FIG.7 is a schematic diagram of an external structure of a sorting swing-wheel unit according to the present disclosure.
FIG.8 is a top view of FIG.7.
FIG.9 is a schematic diagram of an internal structure of the sorting swing-wheel unit according to the present disclosure.
FIG.10 is a schematic diagram of steering matching components of the sorting swing-wheel unit according to the present disclosure.
FIG.11 is a schematic structural diagram of a deviation correction universal ball assembly according to the present disclosure.
FIG.12 is a schematic diagram of a working flow of a working method of the logistics transportation device according to the present disclosure.

1. Stack separation unit; 2. Transport Belt; 3. Single-Piece Separation Unit; 4. Guiding and centering unit; 5. Information Acquisition and Transmission Unit; 6. Transition unit; 7. Sorting Swing-Wheel Unit; 8. Chute; 9. Slide rail; 10. Reflective photoelectric sensor;
11. First stack separation Plate; 12. Second stack separation Plate; 13. Third stack separation Plate;
31. Single-Piece Separator Outer Frame; 32. Separation belt conveyor assembly; 33. Vision Inspection Camera;
41. Guide rail; 42. Guide roller; 43. Guide motor;
51. Camera mounting frame; 52. Information acquisition camera;
61. Input-End Transition Curved Rail; 62. Transition straight rail; 63. Output-End Transition Curved Rail;
71. Swing-Wheel Frame; 72. Base support leg; 73. Transport Assembly;
731. Transport Module; 732. Deviation-Correction Module;
7311. Driver; 7312. Servo motor; 7313. Electric roller; 7314. Steering tie rod; 7315. Steering mounting seat;
7321. Deviation-Correction Base; 7322. Mounting groove; 7323. Universal ball.

### DETAILED DESCRIPTION

The specific embodiments of the present disclosure will be described below with reference to the accompanying drawings.

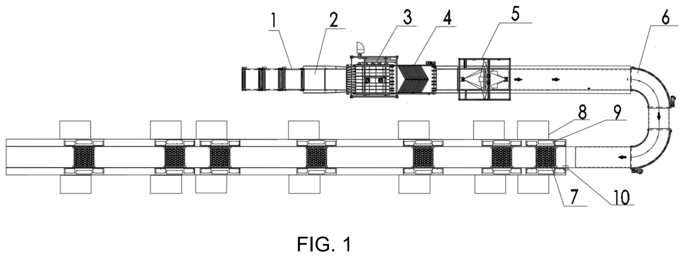

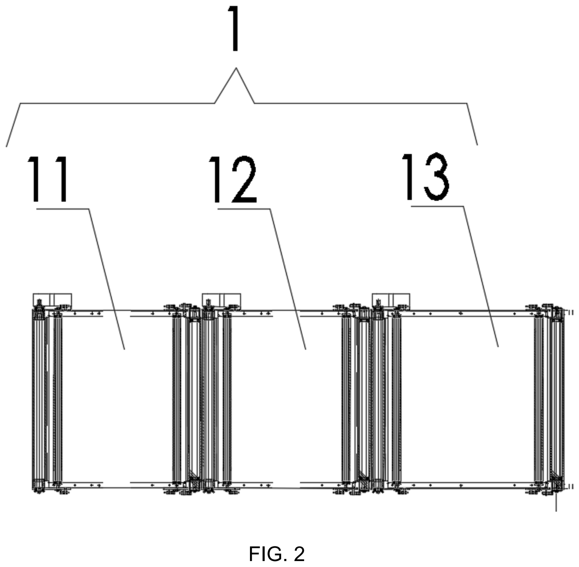

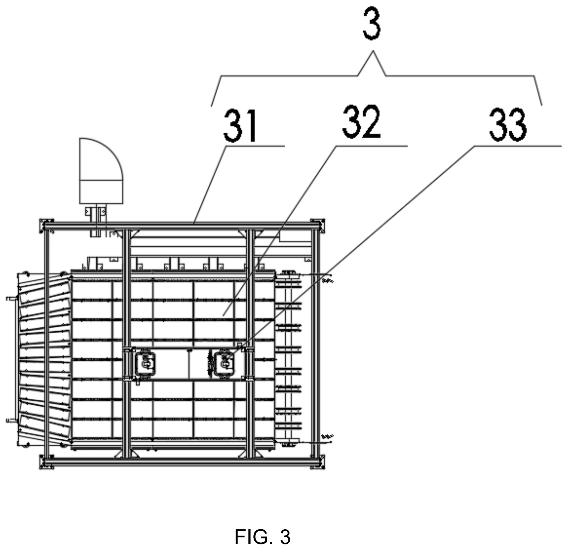

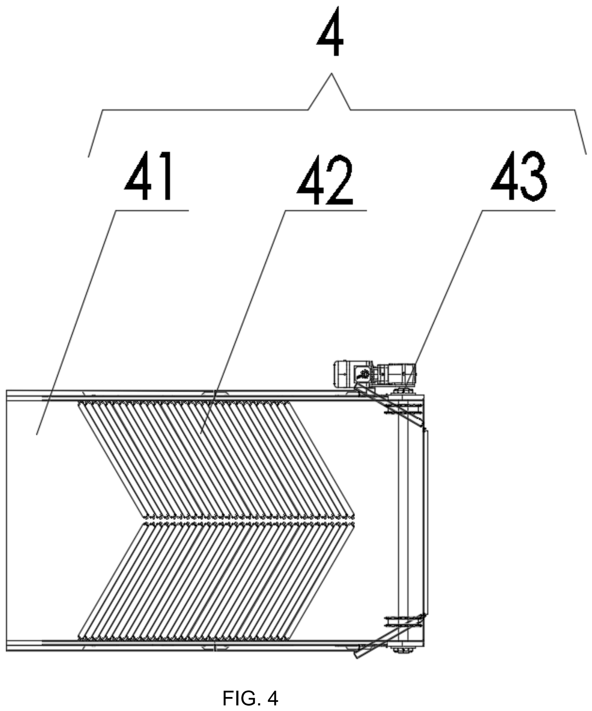

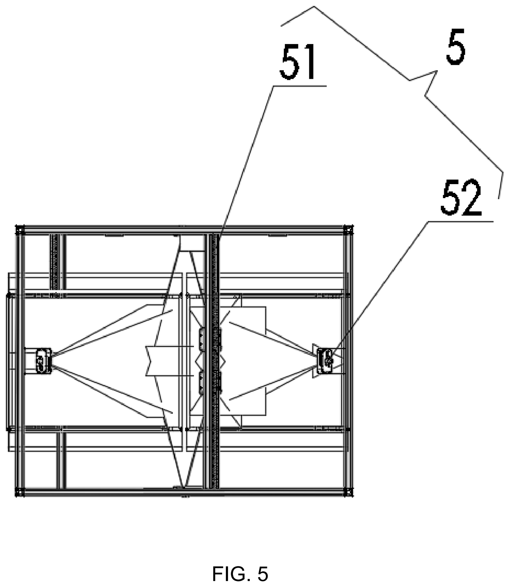

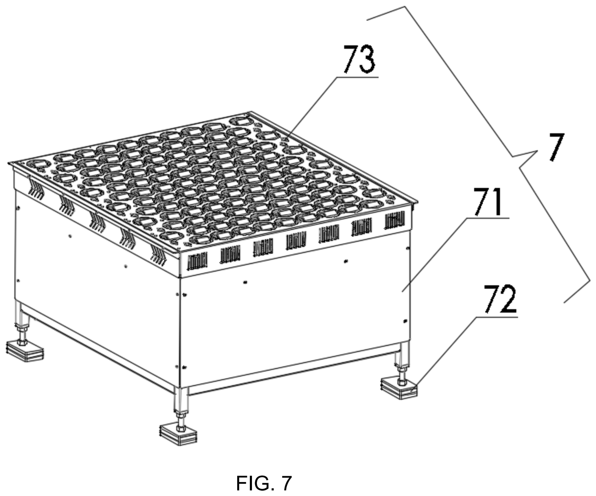

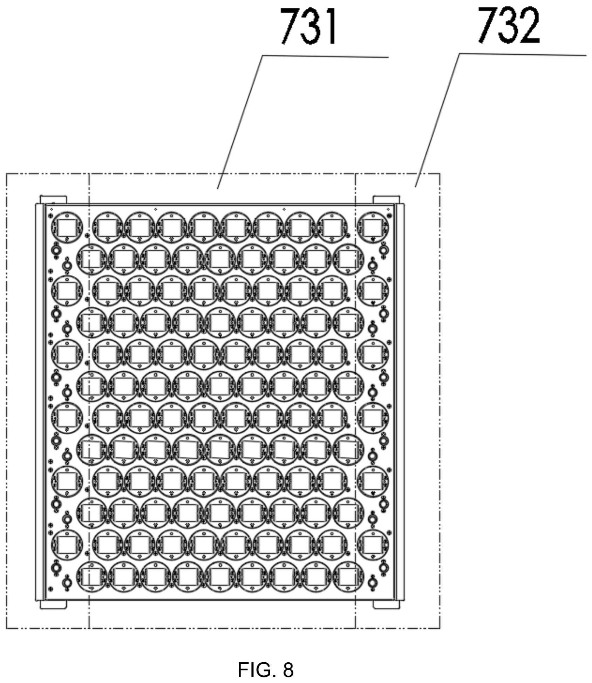

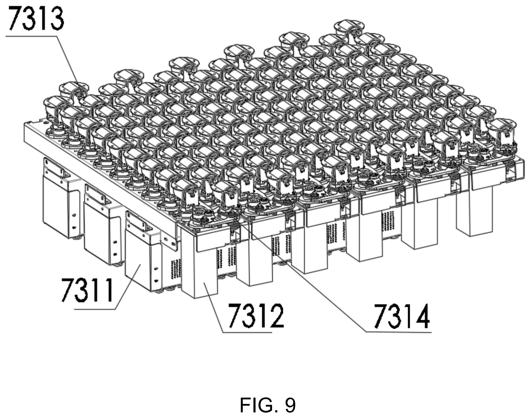

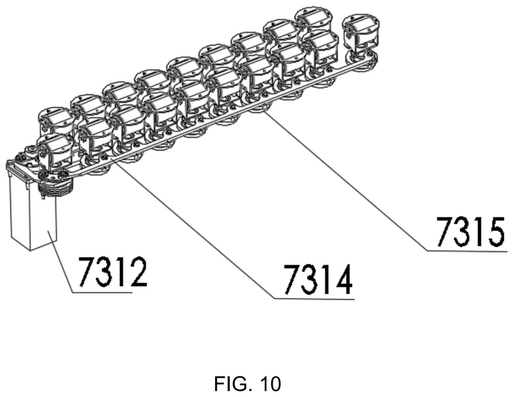

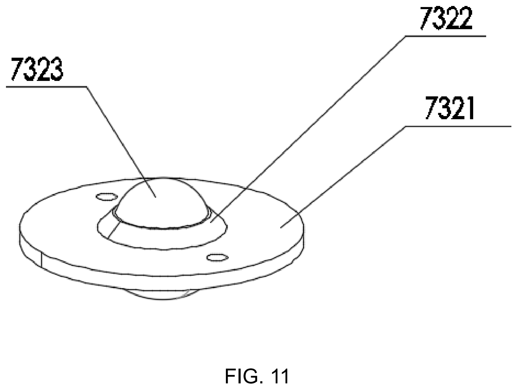

As shown in FIGs. 1 to 11, the logistics transportation device based on a bidirectional swing wheel structure of the present disclosure comprises: a stack separation unit (1), a transport belt (2), a single-piece separation unit (3), a guiding and centering unit (4), an information acquisition and transmission unit (5), a transition unit (6), one or more sorting swing-wheel units (7), one or more chutes (8), one or more slide rails (9), and a reflective photoelectric sensor (10); the stack separation unit (1) is arranged at an input end of the logistics transportation device; a discharge end of the stack separation unit (1) is connected to a feed end of the single-piece separation unit (3) through the transport belt (2); the guiding and centering unit (4) is arranged at the discharge end of the single-piece separation unit (3); packages are transported into the information acquisition and transmission unit (5) after passing through the guiding and centering unit (4); and the information acquisition and transmission unit (5) is connected to a host computer; a discharge end of the information acquisition and transmission unit (5) is connected to a feed end of the transition unit (6); a discharge end of the transition unit (6) is provided with one or more sorting swing-wheel units (7) along a longitudinal direction of a transportation track; the chutes (8) are arranged on two sides of each of the sorting swing-wheel units (7); the slide rails (9) are matched between each of the sorting swing-wheel units (7) and a corresponding one of the chutes (8); and outlets of the slide rails (9) are inclined and directly face the chutes (8); and a reflective photoelectric sensor (10) is arranged at a feed end of the sorting swing-wheel unit (7), which is connected with the discharge end of the transition unit (6) through the transportation track.

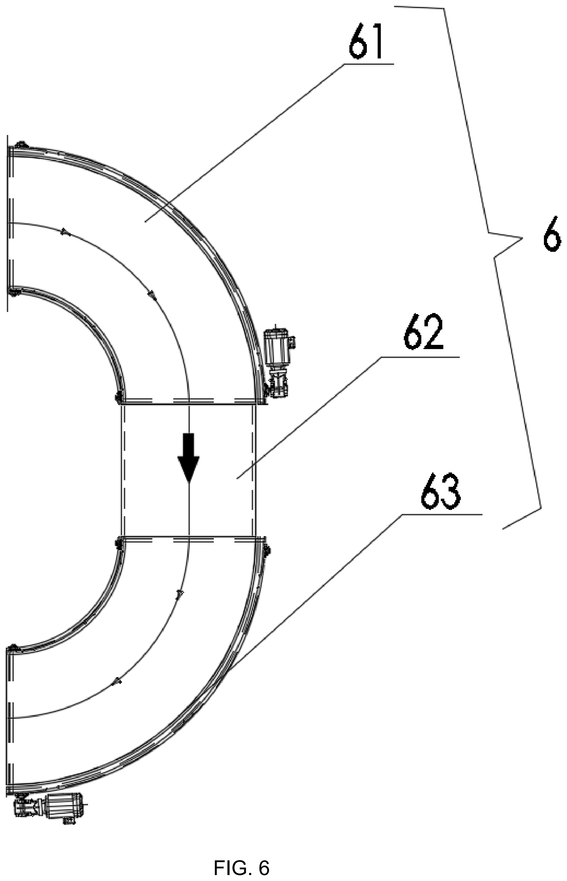

In the present disclosure, the stack separation unit (1) comprises a first stack separation plate (11), a second stack separation plate (12), and a third stack separation plate (13) sequentially arranged along a package transportation direction (indicated by arrows in FIGs. 1 and 6); the first stack separation plate (11), the second stack separation plate (12), and the third stack separation plate (13) are all inclined from low to high along the package transportation direction. The first (11), second (12), and third (13) stack separation plates are arranged sequentially along the package transportation direction, with each plate inclined upward from its feed end (where packages enter) to its discharge end (where packages exit).

In the present disclosure, the single-piece separation unit (3) comprises: a single-piece separator outer frame (31); a separation belt conveyor assembly (32) arranged inside the single-piece separator outer frame (31) along the package transportation direction; and vision inspection cameras (33) arranged at a top of the single-piece separator outer frame (31).

In the present disclosure, the separation belt conveyor assembly (32) comprises a plurality of small separation belt conveyors. Some of the plurality of small separation belt conveyors are transversely arranged and evenly distributed, and the others of the plurality of small separation belt conveyors are longitudinally arranged and evenly distributed; the vision inspection cameras (33) detect positions of the packages conveyed to the separation belt conveyor assembly (32) and upload detected package position information to the host computer; and the host computer controls activation of one or more small separation belt conveyors of the separation belt conveyor assembly (32) corresponding to the position of the packages according to the package position information, so that the separation belt conveyor assembly (32) outputs the packages at a fixed interval and in a single row toward the discharge end of the separation belt conveyor assembly (32).

In the present disclosure, the guiding and centering unit (4) comprises: a guide rail (41) arranged along the package transportation direction; a guide motor (43) driving the guide rail (41); and guide rollers (42) arranged along a running direction of the guide rail (41); the guide rollers (42) are distributed in a bilaterally symmetric "V" shape.

In the present disclosure, the information acquisition and transmission unit (5) comprises: a camera mounting frame (51) arranged around the transportation track along the package transportation direction; and information acquisition cameras (52) arranged on the camera mounting frame (51) at a front, rear, left, right, top, and bottom of the package transportation direction; the information acquisition cameras (52) capture and collect the package information and upload it to the host computer, and the host computer calculates information of the chute.

In the present disclosure, the transition unit (6) comprises: an input-end transition curved rail (61) connected to the discharge end of the information acquisition and transmission unit (5); a transition straight rail (62), where a discharge end of the input-end transition curved rail (61) is connected to a feed end of the transition straight rail (62); and an output-end transition curved rail (63), where a discharge end of the transition straight rail (62) is connected to the feed end of the output-end transition curved rail (63), and a discharge end of the output-end transition curved rail (63) conveys the packages to the sorting swing-wheel units (7) through the transportation track.

In the present disclosure, the sorting swing-wheel unit (7) comprises: a swing-wheel frame (71); base support legs (72) installed at a bottom of the swing-wheel frame (71); and a transport assembly (73) arranged at a top of the swing-wheel frame (71); the transport assembly (73) comprises a transport module (731) for changing directions of the packages being transported, and deviation-correction modules (732) arranged at two sides of the transport module (731).

**In** the present disclosure, the transport module (731) comprises: a driver (7311), servo motors (7312), electric rollers (7313), steering tie rods (7314), and steering mounting seats (7315); the driver (7311) is electrically connected to the electric rollers (7313); an output end at a top of the servo motors (7312) is connected to the steering tie rods (7314); a rod body of each of the steering tie rods (7314) is fixedly connected to the steering mounting seats (7315); the electric rollers (7313) are assembled at a top of the steering mounting seats (7315); when the servo motors (7312) rotate, the steering tie rods (7314) drive the steering mounting seats (7315) to turn, thereby steering the electric rollers (7313) mounted at the top of the steering mounting seats (7315); the driver (7311) is energized to rotate the electric rollers (7313); each of the deviation-correction modules (732) comprises: a deviation-correction base (7321) fixedly installed at the top of the swing-wheel frame (71); a mounting groove (7322) formed at a top of the deviation-correction base (7321); and a universal ball (7323) assembled inside the mounting groove (7322); when any package deviates to one side during transportation, a side of the package abuts a top of the universal ball (7323); a top height of the universal ball (7323) is set higher than an apex height of the electric roller (7313).

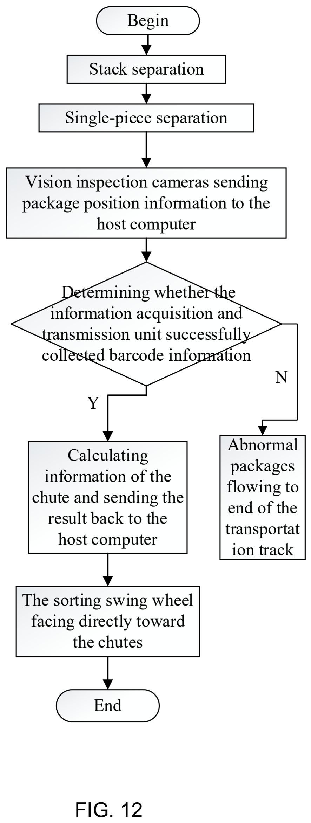

As shown in FIG.12, a working method of a logistics transportation device based on a bidirectional swing wheel structure according to the present disclosure comprises the following steps:
Step 1: feeding stacked packages into a stack separation unit (1) from an input end of a transportation track, wherein the stacked packages pass through inclined surfaces of a first stack separation plate (11), a second stack separation plate (12), and a third stack separation plate (13) in sequence, thereby separating the stacked packages (e.g., by means of the frictional force between the plates and the bottomost surface of the stack);
Step 2: after the packages exit the stack separation unit (1), transporting the packages to a single-piece separation unit (3) through a transport belt (2); vision inspection cameras (33) in the single-piece separation unit (3) detecting positions of the packages conveyed to a separation belt conveyor assembly (32) and uploading the detected package position information to a host computer; the host computer controls activation of the separation belt conveyor assembly (32) according to the package position information, so that the separation belt conveyor assembly (32) outputs the packages at a fixed interval and in a single row toward the discharge end;
Step 3: after the packages are transported out of the single-piece separation unit (3) at a fixed interval and in a single row, guiding the packages into a guiding and centering unit (4); when the packages are passing through guide rollers (42) symmetrically arranged on two sides of the guiding and centering unit (4), guiding the packages out centrally due to a "V"-shaped symmetrical arrangement of the guide rollers (42) on two sides of the guiding and centering unit (4);
Step 4: after the packages pass through the guiding and centering unit (4), guiding the packages out centrally to enter an information acquisition and transmission unit (5); information acquisition cameras (52) of information acquisition and transmission unit (5) collecting barcode information of the packages and uploading the information to the host computer; the host computer calculating the positions of respective chutes (8) corresponding to the packages;
Step 5: conveying the packages out of the information acquisition and transmission unit (5), and passing the packages through a transition unit (6) to enter sorting swing-wheel units (7) along a package transportation direction; at feed end of the sorting swing-wheel units (7), the packages triggering a reflective photoelectric sensor (10), and notifying the sorting swing-wheel units (7) that the packages have entered;
Step 6: the sorting swing-wheel units (7) receiving the positions of the respective chutes (8) corresponding to the packages as calculated by the host computer in Step 4; when the packages arrives at their respective designated positions, servo motors (7312) of the sorting swing-wheel units (7) starting to drive steering tie rods (7314); at this time, steering mounting seats (7315) fixedly connected to the steering tie rods (7314) driving electric rollers (7313) at a top of the steering mounting seats (7315) toward the respective corresponding chutes (8), and the packages respectively entering the corresponding chutes (8) through the slide rails (9) on a side of each of the chutes (8).

In the present disclosure, in Step 6, when the packages enter the sorting swing-wheel unit (7), a certain package may deviate toward a side of the sorting swing-wheel unit (7) due to issues such as irregular package wrapping or machine vibration. At this time, one side of the package will contact the top of the universal ball (7323) in the sorting swing-wheel unit (7). Since the top height of the universal ball (7323) is higher than the arc top height of the electric roller (7313), the center of gravity of the package will slightly deviate toward the transport module (731). The rotation of the electric roller (7313), in cooperation with the rotation of the universal ball (7323), will then guide the package back to the transport module (731), thereby allowing the package to continue to be transported in the package transportation direction.

The device of the present disclosure has a reasonable structural layout and provides high efficiency throughout the entire transportation process. Through the sequential processes of stack separation, single-piece separation, guiding and centering, information collection, chute information determination, and sorting swing wheel steering, the packages are ultimately sent into the corresponding chutes (8) through the slide rails (9). No manual participation is required in the dispersion and arrangement of packages during the entire process, with a high degree of automation, which greatly reduces manpower and material costs.

The above description is an explanation of the present disclosure, not a limitation thereof. The scope of the present disclosure is defined by the claims. Any modifications made within the scope of the present application are intended to fall within the protection thereof.

## Claims

1. A logistics transportation device based on a bidirectional swing wheel structure, comprising: a stack separation unit (1), a transport belt (2), a single-piece separation unit (3), a guiding and centering unit (4), an information acquisition and transmission unit (5), a transition unit (6), one or more sorting swing-wheel units (7), one or more chutes (8), one or more slide rails (9), and a reflective photoelectric sensor (10), wherein:
the stack separation unit (1) is arranged at an input end of the logistics transportation device; a discharge end of the stack separation unit (1) is connected to a feed end of the single-piece separation unit (3) through the transport belt (2);
the guiding and centering unit (4) is arranged at the discharge end of the single-piece separation unit (3); packages are transported into the information acquisition and transmission unit (5) after passing through the guiding and centering unit (4); and the information acquisition and transmission unit (5) is connected to a host computer;
a discharge end of the information acquisition and transmission unit (5) is connected to a feed end of the transition unit (6); a discharge end of the transition unit (6) is provided with one or more sorting swing-wheel units (7) along a longitudinal direction of a transportation track; the chutes (8) are arranged on two sides of each of the sorting swing-wheel units (7); the slide rails (9) are matched between each of the sorting swing-wheel units (7) and a corresponding one of the chutes (8); and outlets of the slide rails (9) are inclined and directly face the chutes (8); and
a reflective photoelectric sensor (10) is arranged at a feed end of the sorting swing-wheel unit (7), which is connected with the discharge end of the transition unit (6) through the transportation track.

2. The device according to claim 1, wherein the stack separation unit (1) comprises a first stack separation plate (11), a second stack separation plate (12), and a third stack separation plate (13) sequentially arranged along a package transportation direction;
the first stack separation plate (11), the second stack separation plate (12), and the third stack separation plate (13) are all inclined from low to high along the package transportation direction.

3. The device according to claim 1, wherein the single-piece separation unit (3) comprises: a single-piece separator outer frame (31); a separation belt conveyor assembly (32), wherein the separation belt conveyor assembly (32) is arranged inside the single-piece separator outer frame (31) along the package transportation direction; and vision inspection cameras (33), wherein the vision inspection cameras (33) are arranged at a top of the single-piece separator outer frame (31).

4. The device according to claim 3, wherein the separation belt conveyor assembly (32) comprises small separation belt conveyors; some of the small separation belt conveyors are transversely arranged and evenly distributed, and the others of the small separation belt conveyors are longitudinally arranged and evenly distributed;
the vision inspection cameras (33) detect positions of the packages conveyed to the separation belt conveyor assembly (32) and upload detected package position information to the host computer; and the host computer controls activation of the separation belt conveyor assembly (32) according to the package position information, so that the separation belt conveyor assembly (32) outputs the packages at a fixed interval and in a single row toward the discharge end.

5. The device according to claim 1, wherein the guiding and centering unit (4) comprises: a guide rail (41), wherein the guide rail (41) is arranged along the package transportation direction; a guide motor (43), wherein the guide motor (43) drives the guide rail (41); guide rollers (42), wherein the guide rollers (42) are arranged along a running direction of the guide rail (41);
the guide rollers (42) are distributed in a bilaterally symmetric "V" shape.

6. The device according to claim 1, wherein the information acquisition and transmission unit (5) comprises: a camera mounting frame (51) arranged around the transportation track along the package transportation direction; and information acquisition cameras (52) arranged on the camera mounting frame (51) at a front, rear, left, right, top, and bottom of the package transportation direction,
wherein the information acquisition cameras (52) capture and collect the package information and upload it to the host computer, and the host computer calculates information of the chute.

7. The device according to claim 1, wherein the transition unit (6) comprises: an input-end transition curved rail (61) connected to the discharge end of the information acquisition and transmission unit (5); a transition straight rail (62), wherein a discharge end of the input-end transition curved rail (61) is connected to a feed end of the transition straight rail (62); and an output-end transition curved rail (63), wherein a discharge end of the transition straight rail (62) is connected to the feed end of the output-end transition curved rail (63), and a discharge end of the output-end transition curved rail (63) conveys the packages to the sorting swing-wheel units (7) through the transportation track.

8. The device according to claim 1, wherein each of the sorting swing-wheel units (7) comprises: a swing-wheel frame (71); base support legs (72), wherein the base support legs (72) are installed at a bottom of the swing-wheel frame (71); and a transport assembly (73) arranged at a top of the swing-wheel frame (71),
wherein the transport assembly (73) comprises a transport module (731) for changing directions of the packages being transported, and deviation-correction modules (732) arranged at two sides of the transport module (731).

9. The device according to claim 8, wherein the transport module (731) comprises: a driver (7311), servo motors (7312), electric rollers (7313), steering tie rods (7314), and steering mounting seats (7315); the driver (7311) is electrically connected to the electric rollers (7313); an output end at a top of the servo motors (7312) is connected to the steering tie rods (7314); a rod body of each of the steering tie rods (7314) is fixedly connected to the steering mounting seats (7315); the electric rollers (7313) are assembled at a top of the steering mounting seats (7315); when the servo motors (7312) rotate, the steering tie rods (7314) drive the steering mounting seats (7315) to turn, thereby steering the electric rollers (7313) mounted at the top of the steering mounting seats (7315); the driver (7311) is energized to rotate the electric rollers (7313);
wherein each of the deviation-correction modules (732) comprises: a deviation-correction base (7321) fixedly installed at the top of the swing-wheel frame (71); a mounting groove (7322) formed at a top of the deviation-correction base (7321); and a universal ball (7323) assembled inside the mounting groove (7322); wherein when one of the packages deviates to one side during transportation, a side of the package abuts a top of the universal ball (7323); a top height of the universal ball (7323) is set higher than an apex height of the electric roller (7313);
the driver (7311) is a bidirectional driver, and is electrically connected to a PLC controller.

10. A working method of a logistics transportation device based on a bidirectional swing wheel structure, comprising:
Step 1: feeding stacked packages into a stack separation unit (1) from an input end of a transportation track, wherein the stacked packages pass through inclined surfaces of a first stack separation plate (11), a second stack separation plate (12), and a third stack separation plate (13) in sequence, thereby separating the stacked packages;
Step 2: after the packages exit the stack separation unit (1), transporting the packages to a single-piece separation unit (3) through a transport belt (2); vision inspection cameras (33) in the single-piece separation unit (3) detecting positions of the packages conveyed to a separation belt conveyor assembly (32) and uploading the detected package position information to a host computer; the host computer controls activation of the separation belt conveyor assembly (32) according to the package position information, so that the separation belt conveyor assembly (32) outputs the packages at a fixed interval and in a single row toward the discharge end;
Step 3: after the packages are transported out of the single-piece separation unit (3) at a fixed interval and in a single row, guiding the packages into a guiding and centering unit (4); when passing through guide rollers (42) symmetrically arranged on two sides of the guiding and centering unit (4), guiding the packages out centrally due to a "V"-shaped symmetrical arrangement of the guide rollers (42) on two sides of the guiding and centering unit (4);
Step 4: after the packages pass through the guiding and centering unit (4), guiding the packages out centrally to enter an information acquisition and transmission unit (5); information acquisition cameras (52) of information acquisition and transmission unit (5) collecting barcode information of the packages and uploading the information to the host computer; the host computer calculating the positions of respective chutes (8) corresponding to the packages;
Step 5: conveying the packages out of the information acquisition and transmission unit (5), and passing the packages through a transition unit (6) to enter sorting swing-wheel units (7) along a package transportation direction; at feed end of the sorting swing-wheel units (7), the packages triggering a reflective photoelectric sensor (10), and notifying the sorting swing-wheel units (7) that the packages have entered; and
Step 6: the sorting swing-wheel units (7) receiving the positions of the respective chutes (8) corresponding to the packages as calculated by the host computer in Step 4; when the packages arrives at their respective designated positions, servo motors (7312) of the sorting swing-wheel units (7) starting to drive steering tie rods (7314); at this time, steering mounting seats (7315) fixedly connected to the steering tie rods (7314) driving electric rollers (7313) at a top of the steering mounting seats (7315) toward the respective corresponding chutes (8), and the packages respectively entering the corresponding chutes (8) through the slide rails (9) on a side of each of the chutes (8).
